# EUROPÄISCHE PATENTANMELDUNG

(11) **EP 4 553 780 A2**
(43) Veröffentlichungstag der Anmeldung: **14.05.2025**
(21) Anmeldenummer: 24206345.1
(22) Anmeldetag: 14.10.2024
(51) Int. Cl.: G06V 10/147, G02B 3/14, G02B 26/00, G06V 10/80, G06V 40/13, G06V 40/16, G06V 40/19

(54) **GERÄT ZUR BIOMETRISCHEN VERIFIZIERUNG UND/ODER IDENTIFIZIERUNG**

(30) Priorität: 19.10.2023 CZ 202341396 U; 20.12.2023 DE 102023136019
(71) Anmelder: Touchless Biometric Systems AG, 8808 Pfäffikon (CH)
(72) Erfinder: DRAHANSKY, Martin, 616 00 Brno (CZ); MALANIK, Petr, 779 00 Olomouc (CZ); VANA, Jan, 281 26 Tynec nad Labem (CZ); DVORAK, Radim, 679 04 Adamov (CZ); TRHON, Adam, 621 00 Brno (CZ); MEISTER, Torsten, 88171 Weiler-Simmerberg (DE); KANICH, Ondrej, 739 34 Senov (CZ)
(74) Vertreter: Liedtke & Partner Patentanwälte

(57) **Zusammenfassung**

Die Erfindung betrifft ein berührungsloses, multimodales biometrisches Gerät (1) für die biometrische Verifizierung und/oder biometrische Identifizierung einer Person,
umfassend:
- eine Verarbeitungseinheit (20),
- eine erste Kameraeinheit (4), die zur Abtastung eines Raumes außerhalb des biometrischen Gerätes (1) oder in einem offenen Hohlraum des biometrischen Gerätes (1) angeordnet ist und die eine erste Linse (4b) und einen ersten Kamera-Sensor (4a) umfasst, der mit einer Verarbeitungseinheit (20) verbunden ist, und
- einen ersten Annäherungssensor (6) zur Messung einer Entfernung eines in dem von der ersten Kameraeinheit (4) erfassten Raum angeordneten Objekts von dem ersten Annäherungssensor (6), der mit der Verarbeitungseinheit (20) zur Übertragung der gemessenen Entfernungswerte verbunden ist,
- wobei die erste Linse (4b) als eine Flüssiglinse ausgebildet und mit der Verarbeitungseinheit (20) verbunden ist, um Signale für ihre Fokussierung auf der Grundlage der vom ersten Annäherungssensor (6) gemessenen Entfernungswerte zu empfangen.

## Beschreibung

Die Erfindung betrifft ein Gerät zur biometrischen Verifizierung und/oder Identifizierung unter Verwendung von Merkmalen von Fingerabdrücken und/oder Gesichtsmerkmalen. Das Gerät weist eine Kamera mit einer oder mehreren Flüssiglinsen oder Festkörperlinsen, eine oder mehrere Beleuchtungseinheiten, einen oder mehrere Annäherungssensoren, eine Anzeigeeinheit, eine Haupt-Platine zur Auswertung, optional eine 3D-Kamera und optional ein berührungsloses Lesegerät für biometrische Identitätsdokumente auf. Unter einem biometrischen Identitätsdokument soll zum Beispiel ein biometrischer Reisepass oder ein biometrischer Personalausweis verstanden werden. Dieses Gerät ist zur Zugangskontrolle, Grenzkontrolle und Identifizierung und/oder Verifizierung einer Person bestimmt, beispielsweise in einer mobilen Version für Polizeibeamte.

### Stand der Technik

Biometrische Identifizierung und/oder Verifizierung unter Verwendung von Fingerabdrücken und/oder Gesichtsmerkmalen ist ein grundsätzlich bekanntes Verfahren, das auf der sehr geringen Wahrscheinlichkeit beruht, dass zwei Menschen dieselben Fingerabdrücke und/oder Gesichtsmerkmale aufweisen.

Die Aufnahme biometrischer Proben von Fingerabdrücken ist entweder möglich durch (i) *Kontakt* (das heißt, dass die Person einen Finger oder die ganze Hand auf eine bestimmte Scanoberfläche eines Scangeräts legt, welches ein Bild des Fingers und/oder der Hand aufnimmt) oder auf (ii) *berührungslose Weise* (das heißt, dass das Aufnahmegerät ein Bild des Fingers und/oder der Hand über eine Entfernung aufnimmt, das heißt ohne dass die Person die Teile des Detektionsgerätes berühren muss). Der Nachteil kontaktbehafteter Verfahren und Geräte ist das Risiko der inkorrekten Identifizierung (oder Verifizierung) infolge von Kontamination der Kontaktfläche des Aufnahmegerätes. Zusätzlich kann sich die Haut der Fingerkuppe elastisch ändern, was mit dem ausgeübten Druck auf den Finger eng zusammenhängt. Der zweite große Nachteil ist die Möglichkeit der Übertragung von Bakterien und Viren von der Oberfläche des Gerätes auf andere Nutzer. Es handelt sich also um eine unhygienische Lösung. Daher wurden in letzter Zeit berührungslose Verfahren und Geräte für die biometrische Identifizierung und/oder Verifizierung anhand von Fingerabdrücken entwickelt. Geräte zur Identifizierung und/oder Verifizierung von Gesichtern sind natürlich schon aufgrund der Art des Scan-Verfahrens berührungslos.

In jedem Fall wird der aufgenommene Fingerabdruck oder werden die aufgenommenen Fingerabdrücke und Gesichtsbilder dann verarbeitet, um diesen/diese mit den in der Datenbank gespeicherten biometrischen Mustern registrierter Personen oder mit dem im biometrischen Identitätsdokument gespeicherten Muster zu vegleichen.

Im Falle berührungsloser biometrischer Identifizierung und/oder Verifizierung anhand von Fingerabdrücken ist eine Anzahl von Lösungen bekannt, die im Wesentlichen damit befasst sind, ein fokussiertes Bild des Fingers und/oder der Hand von hinreichend hoher Qualität und mit hervorragendem Kontrast für anschließende Verarbeitung und Vergleich zu erlangen, während der Finger und/oder die Hand sich mit einer bestimmten Geschwindigkeit durch den Detektionsraum des Aufnahmegerätes bewegt.

Die Aufgabe der vorliegenden Erfindung ist, ein neuartiges Gerät für die biometrische Verifizierung und/oder biometrische Identifizierung einer Person und ein neuartiges Verfahren zu dessen Betrieb bereitzustellen.

Die Aufgabe wird erfindungsgemäß gelöst durch ein Gerät für die biometrische Verifizierung und/oder biometrische Identifizierung einer Person mit den Merkmalen des Anspruchs 1 und durch ein Verfahren mit den Merkmalen des Anspruchs 11.

Vorteilhafte Weiterbildungen sind Gegenstand der Unteransprüche.

Es wird ein berührungsloses, multimodales biometrisches Gerät für die biometrische Verifizierung und/oder biometrische Identifizierung einer Person vorgeschlagen, umfassend:
- eine Verarbeitungseinheit,
- eine erste Kameraeinheit, die zur Abtastung eines Raumes außerhalb des biometrischen Gerätes oder in einem offenen Hohlraum des biometrischen Gerätes angeordnet ist und die eine erste Linse und einen ersten Kamera-Sensor umfasst, der mit einer Verarbeitungseinheit verbunden ist, und
- einen ersten Annäherungssensor zur Messung einer Entfernung eines in dem von der ersten Kameraeinheit erfassten Raum angeordneten Objekts von dem ersten Annäherungssensor, der mit der Verarbeitungseinheit zur Übertragung der gemessenen Entfernungswerte verbunden ist,
- wobei die erste Linse mit der Verarbeitungseinheit verbunden ist, um Signale für ihre Fokussierung auf der Grundlage der vom ersten Annäherungssensor gemessenen Entfernungswerte zu empfangen. Ebenso kann die Linse anhand einer schnell berechneten Schärfe des aufgenommenen Bildes gesteuert werden.

In einer Ausführungsform umfasst das berührungslose, multimodale biometrische Gerät ferner eine erste Beleuchtungseinheit, insbesondere in Form einer Anordnung von Leuchten, die insbesondere in gleichmäßigem Winkelabstand um die erste Linse herum angeordnet sind.

In einer Ausführungsform umfasst das berührungslose, multimodale biometrische Gerät ferner eine zweite Kameraeinheit mit einem zweiten Kamera-Sensor und einer zweiten Linse, die mit der Verarbeitungseinheit verbunden ist.

In einer Ausführungsform sind/ist die erste Linse und/oder die zweite Linse eine Flüssiglinse oder eine Linse mit einem motorisierten Fokussierungsmechanismus.

In einer Ausführungsform ist die zweite Kameraeinheit zum Erfassen eines Bereichs außerhalb der biometrischen Vorrichtung angeordnet,
- wobei das biometrische Gerät einen zweiten Annäherungssensor aufweist, der so angeordnet ist, dass er einen Abstand eines in dem von der zweiten Kameraeinheit erfassten Raum angeordneten Objekts von dem zweiten Annäherungssensor misst, und der mit der Verarbeitungseinheit zum Übertragen der gemessenen Entfernungswerte verbunden ist,
- wobei die zweite Linse mit der Verarbeitungseinheit verbunden ist, um Signale für ihre Fokussierung auf der Grundlage der vom zweiten Annäherungssensor gemessenen Entfernungswerte zu empfangen. Ebenso kann die Linse anhand einer schnell berechneten Schärfe des aufgenommenen Bildes gesteuert werden.

In einer Ausführungsform umfasst das berührungslose, multimodale biometrische Gerät eine Vorderseite (beispielsweise an einem Gehäuse), an der die zweite Kameraeinheit und darunter die erste Kameraeinheit angeordnet ist.

In einer Ausführungsform umfasst das berührungslose, multimodale biometrische Gerät eine Vorderseite (beispielsweise an einem Gehäuse), an der die zweite Kameraeinheit und darunter an der Vorderseite ein Eingang zu dem offenen Hohlraum angeordnet ist, in dem ein Spiegel angeordnet ist, um den von der ersten Kameraeinheit abgetasteten Raum in dem offenen Hohlraum zu reflektieren.

In einer Ausführungsform weist das berührungslose, multimodale biometrische Gerät ferner ein mit der Verarbeitungseinheit verbundenes Lesegerät zum Lesen biometrischer Identitätsdokumente, insbesondere darin angeordneter Chips, auf. Das Lesegerät kann hierzu eine Antenne aufweisen.

In einer Ausführungsform umfasst das berührungslose, multimodale biometrische Gerät ferner eine Anzeigeeinheit zur Anzeige der Identifizierungsergebnisse und/oder Verifizierungsergebnisse, verbunden mit der Verarbeitungseinheit.

In einer Ausführungsform umfasst das berührungslose, multimodale biometrische Gerät ferner eine 3D-Kamera, die so angeordnet ist, dass sie den Bereich außerhalb des biometrischen Geräts erfasst und die mit der Verarbeitungseinheit verbunden ist.

Gemäß einem Aspekt der vorliegenden Erfindung wird ein Verfahren zum Betrieb des oben beschriebenen multimodalen biometrischen Gerätes vorgeschlagen, wobei mittels der ersten Kameraeinheit mehrere Bilder einer Hand-Innenfläche einer Hand mit mehreren Fokusebenen, in denen die Hand-Innenfläche und/oder Fingerspitzen von Fingern der Hand liegen, aufgenommen und an die Verarbeitungseinheit übermittelt werden, durch die eine biometrische Identifizierung durchgeführt wird. Als biometrische Verifizierung kann ein Vergleich bezeichnet werden, bei dem eine angenommene oder vorgebliche Identität einer Person überprüft werden soll. Dabei kommt es zum Vergleich aktuell eingelesener biometrischer Daten mit einem abgespeicherten biometrischen Muster (sofern vorhanden) der konkreten Person. Mit biometrischer Identifizierung ist die Ermittlung der Identität der Person gemeint. Dabei müssen gegebenenfalls alle biometrischen Muster, die in einer Datenbank gespeichert sind, durchgegangen werden, um das biometrische Muster mit dem besten Vergleichs-Score als die gefundene Identität zu deklarieren. Falls der Vergleichs-Score eine vorgegebene minimale Schwelle nicht überschreitet, dann wurde die Identität nicht gefunden. Im Falle biometrischer ID-Dokumente handelt es sich immer um eine Verifizierung.

In einer Ausführungsform werden mehrere Sätze, beispielsweise drei Sätze, von Bildern der Hand-Innenfläche mit mehreren Fokusebenen, in denen die Hand-Innenfläche und/oder Fingerspitzen liegen, aufgenommen, wobei ein erster Satz aufgenommen wird, wenn die Hand-Innenfläche in einer ersten Position im rechten Winkel zu einer optischen Achse der ersten Kameraeinheit präsentiert wird, wobei ein zweiter Satz aufgenommen wird, wenn die Hand aus dieser Position um eine proximal-distale Achse nach links gedreht wurde, wobei ein dritter Satz aufgenommen wird, wenn die Hand aus der ersten Position um die proximal-distale Achse nach rechts gedreht wurde. Die proximal-distale Achse kann beispielsweise eine Achse sein, die durch einen gestreckten Mittelfinger des Nutzers verläuft.

Auf diese Weise wird es ermöglicht, die Ansicht jedes Fingers von links, von vorn und von rechts zu fusionieren (stitching), um eine Art eines abgerollten Abdrucks zu erhalten, der verglichen mit lediglich einer Ansicht von vorn einen wesentlich größeren Bereich abdeckt. Auf diese Weise wird ein Äquivalent zu einem abgerollten Fingerabdruck und/oder Hand-Innenflächen-Bild für zivile und/oder kriminalistische Zwecke generiert und/oder die Wahrscheinlichkeit erhöht, dass der Nutzer erkannt wird, wenn die Hand nicht vollständig frontal zum Gerät präsentiert wurde.

Der Nutzer kann durch Ausgaben auf der Anzeigeeinheit aufgefordert werden, seine Hand in die verschiedenen Positionen zu bewegen.

In einer Ausführungsform wird mittels der ersten oder zweiten Kameraeinheit ein maschinenlesbarer Bereich einer Seite eines biometrischen Identitätsdokuments erfasst, wobei im maschinenlesbaren Bereich vorhandene Zeichen durch die Verarbeitungseinheit erkannt und ein darin enthaltener Schlüssel extrahiert wird, wobei mittels des Lesegerätes unter Verwendung des Schlüssels Daten aus einem im biometrischen Identitätsdokument vorhandenen Chip ausgelesen werden.

In einer Ausführungsform wird mittels der zweiten Kameraeinheit, ausgelöst vom Annäherungssensor, unter Verwendung der Beleuchtungseinheit mindestens ein Bild des Gesichts eines Nutzers aufgenommen und an die Verarbeitungseinheit übermittelt, durch die die biometrische Identifizierung durchgeführt wird.

In einer Ausführungsform wird mittels der zweiten Kameraeinheit, ausgelöst vom Annäherungssensor, unter Verwendung der Beleuchtungseinheit mindestens ein Bild einer rechten Iris und/oder einer linken Iris eines Nutzers aufgenommen und an die Verarbeitungseinheit übermittelt, durch die die biometrische Identifizierung durchgeführt wird.

In einer Ausführungsform werden/wird aus den aufgenommenen Bildern der Hand-Innenfläche Fingerabdrücke und/oder ein Handflächenabdruck ermittelt, wobei die ermittelten Fingerabdrücke und/oder der ermittelte Handflächenabdruck mit einem biometrischen Muster aus den vom Chip ausgelesenen Daten verglichen werden/wird.

Dieser Prozess wird als biometrische Verifizierung der behaupteten Identität des Nutzers bezeichnet und basiert auf Fingerabdrücken und/oder dem Handflächenabdruck, wobei das biometrische Identitätsdokument als Referenz verwendet wird.

In einer Ausführungsform werden/wird das aufgenommene Bild des Gesichts und/oder das Bild der rechten Iris und/oder der linken Iris mit einem biometrischen Muster aus den vom Chip ausgelesenen Daten verglichen.

Dieser Prozess wird als biometrische Verifizierung der behaupteten Identität des Nutzers bezeichnet und basiert auf Bildern des Gesichts und/oder der rechten Iris und/oder einer linken Iris, wobei das biometrische Identitätsdokument als Referenz verwendet wird.

Die Kombinationsmöglichkeiten biometrischer Modalitäten können in einem einzigen Gerät vorgesehen sein. Dabei können Gruppen aller biometrischen Modalitäten, das heißt mindestens ein Fingerabdruck, ein Handflächenabdruck, ein Gesichtsbild und/oder mindestens ein Irisbild, umfassend zwei, drei oder vier der Modalitäten in beliebiger Reihenfolge kombiniert werden.

In einer Ausführungsform werden mittels der 3D-Kamera eine Position und eine Ausrichtung der Hand und/oder des Kopfes des Nutzers geprüft und eine Rückmeldung an den Nutzer mit der Aufforderung gegeben, die Position und/oder Ausrichtung zu korrigieren.

Von der 3D-Kamera ermittelte Daten können ferner zur biometrischen Erkennung der dreidimensionalen Struktur des Kopfes und/oder der dreidimensionalen Geometrie der Hand verwendet werden.

Das in der vorliegenden Anmeldung beschriebene Gerät benötigt wenig Raum, kann beispielsweise an einer Wand angebracht werden, ist berührungslos und ermöglicht die Aufnahme mindestens eines signifikanten biometrischen Merkmals (beispielsweise zweier signifikanter biometrischer Merkmale) und unterstützt die Verwendung biometrischer Identitätsdokumente.

Das Gerät ist modular und erlaubt die Aufnahme und Erkennung von Fingerabdrücken oder Gesichtern oder kombiniert zumindest diese beiden biometrischen Merkmale in einem biometrischen Erkennungsprozess. Diese grundsätzliche Konfiguration kann durch die optionale Verwendung biometrischer Identitätsdokumente und/oder die optionale Verwendung einer 3D-Kamera erweitert werden. Die 3D-Kamera kann verwendet werden, um die genaue Position und Ausrichtung der aufgenommenen biometrischen Merkmale sicherzustellen, und kann außerdem die Aufnahme und Erkennung einer 3D-Gesichts-Geometrie und/oder einer 3D-Hand-Geometrie einschließlich der anschließenden biometrischen Erkennung ermöglichen.

Wenn nur Fingerabdrücke verwendet werden, dann wird die sich nähernde Hand mittels eines Annäherungssensors detektiert. Der Annäherungssensor triggert den Start der Aufnahme der Hand mit verschiedenen Fokusebenen um die Schärfe der Bilder einzelner Finger sicherzustellen, die im Raum unterschiedlich ausgerichtet sein können (es ist schwierig, alle Fingerspitzen in derselben Ebene zu positionieren). Diese Fingerabdrücke werden anschließend verarbeitet und die Indentifizierung oder Verifizierung wird durchgeführt. Die Beleuchtungseinheit kann entsprechend der Form (kreisförmig oder rechteckig), Lokalisierung, der verwendeten Wellenlänge(n), insbesondere Infrarot oder grün, und der erforderlichen Beleuchtungsstärke eingestellt werden, um ein hochqualitatives Bild des oberen Teils der Hand (das heißt der Finger oder Fingerkuppen) sicherzustellen.

Bei der Aufnahme des Gesichts ist die Situation sehr ähnlich - anstelle der Finger wird das Gesicht aufgenommen und anschließend wird die Indentifizierung oder Verifizierung durchgeführt. Die Beleuchtungseinheit kann hinsichtlich der Form (kreisförmig oder rechteckig) und/oder Lokalisierung des zu beleuchtenden Bereichs, der verwendeten Wellenlänge(n) und der erforderlichen Beleuchtungsstärke eingestellt werden. Die Einstellungen sollen insbesondere so gewählt werden, dass eine Schädigung des Auges oder Unbehagen des Nutzers vermieden wird.

Die Kombination aus Fingerabdruck (Fingerabdrücken) und Gesicht ist ein interessanter Vorteil, der durch die Verwendung eines multimodalen biometrischen Gerätes ermöglicht wird. Die Beleuchtungseinheit sollte entsprechend dem Einsatzzweck und unter Beachtung der Sicherheit des Nutzers eingestellt werden.

In der vorliegenden Lösung kann eine PAD (Presentation Attack Detection) durch multispektrale Erkennung (mit ausgewählten Wellenlängen) und/oder durch Erkennung von Blutbahnen im infraroten Lichtspektrum vorgesehen sein. Diese Verfahren sind in der wissenschaftlichen Literatur beschrieben. Beispielsweise kann ein neuronales Netzwerk trainiert werden, das unterschiedliche Muster im Bild erkennt, die auf eine Fälschung des Fingerabdruckes hinweisen können (beispielsweise Blasen im Material, Krümmung der Papillarlinien, scharfe Kanten der Fälschung und ähnliches).

Eine weitere Option ist die Verifizierung mit biometrischen Daten, die im biometrischen Muster eines biometrischen Identitätsdokuments gespeichert sind. Die Vorderseite des biometrischen Identitätsdokuments wird hierzu beispielsweise von der Kamera gescannt, um die MRZ (Machine Readable Zone - maschinenlesbare Zone) durch optische Zeichenerkennung (OCR) zu erkennen. Die MRZ enthält den Schlüssel zum Zugang zu öffentlich verfügbaren Daten in einem Chip des Identitätsdokuments (beispielsweise persönliche Daten des Nutzers und/oder ein Gesichtsbild). Für einen Zugang zu geschützten Daten im Chip wird ein spezielles Zertifikat benötigt, das durch authorisierte Behörden bereitgestellt werden kann. Eine Funkeinheit (RFID/NFC) liest dann die Daten vom Chip des biometrischen Dokuments (Identitätsdokument) ein, wenn dieses auf das Gerät zu bewegt wird. Das Auslesen der Daten aus dem Identitätsdokument kann zehn oder mehr Sekunden dauern, wobei das Dokument an das Gerät angelegt werden kann, damit die Daten sicher ausgelesen werden können. Anschließend werden die gerade aufgenommenen biometrischen Daten mit den Daten des im biometrischen Identitätsdokument gespeicherten biometrischen Musters verglichen.

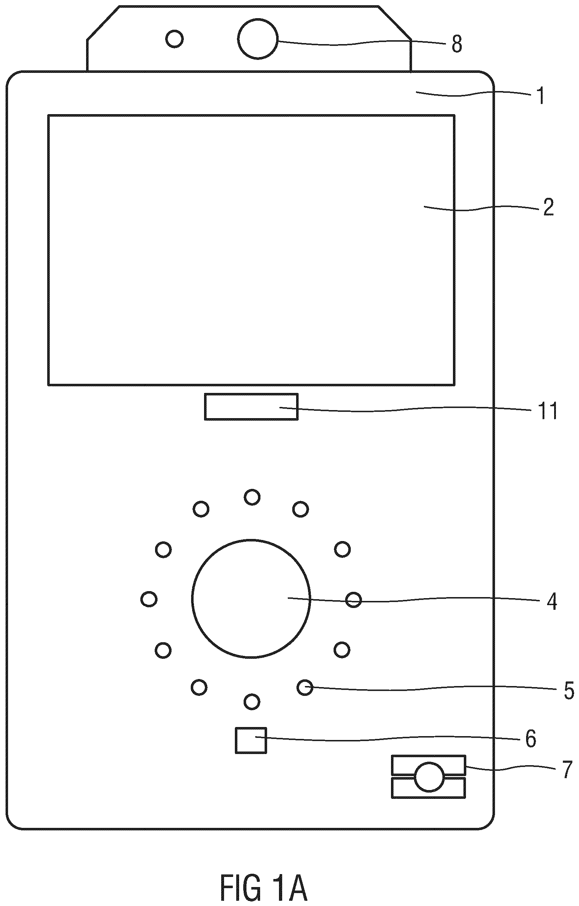

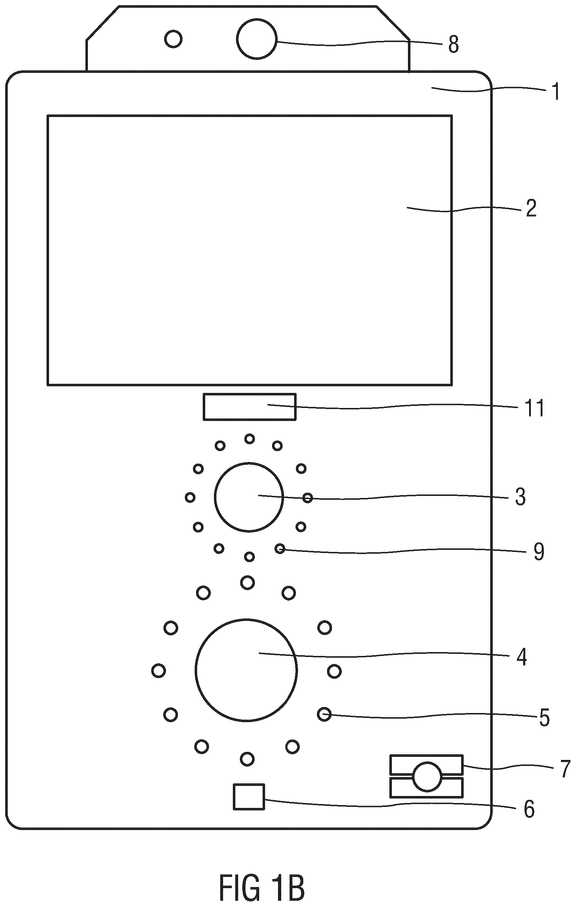

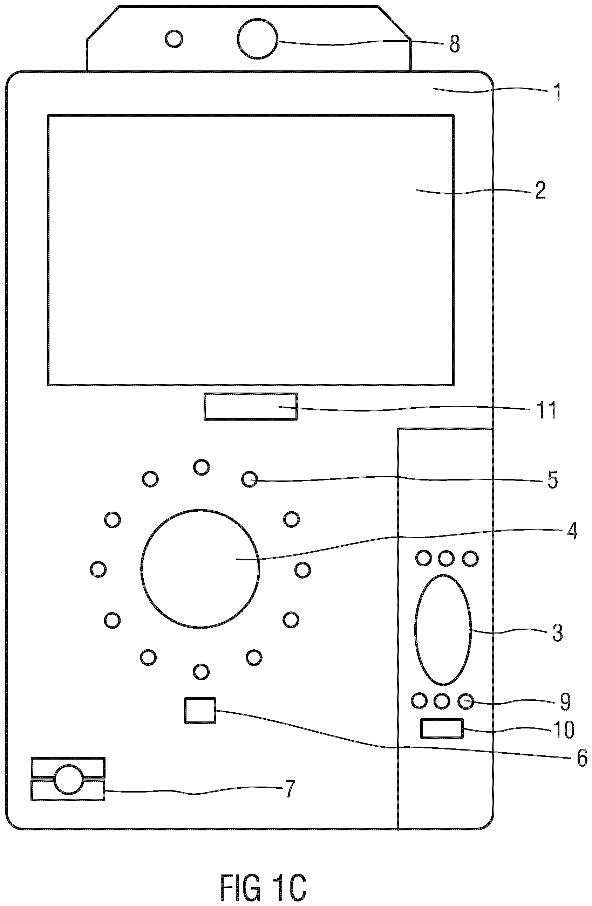

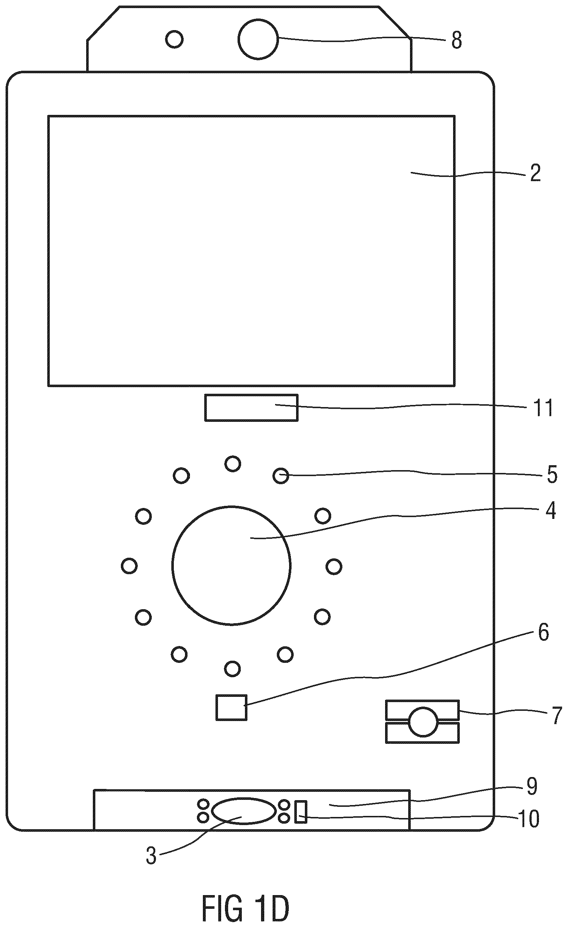

Alle Varianten des Gerätes (siehe Figur 1) können mit einer 3D-Kamera ausgerüstet sein, was die genaue Bestimmung der Position der Hand und/oder des Gesichts vor dem Gerät ermöglicht. Dies erlaubt dem Nutzer, die Position seiner Hand und/oder seines Gesichts zu korrigieren. Ferner kann so die Erkennung der 3D-Daten des Gesichts und/oder der Hand, das heißt zusätzlicher Informationen zur multimodalen biometrischen Erkennung, ermöglicht werden. Ebenso kann die 3D-Kamera als zusätzliches Modul für die PAD dienen (Schutz gegen Werkzeuge für Präsentationsangriffe, die insbesondere zweidimensional oder dreidimensional mit geringer Qualität ausgebildet sein können). Die in Figur 1C gezeigte Variante kann für linkshändige oder rechtshändige Personen eingerichtet sein.

In allen Varianten (siehe Figur 1) kann das Lesen und Interpretieren von QR-Codes (Quick Response) unterstützt werden.

Eine Anzeigeeinheit des Gerätes kann berührungsempfindlich (Touchdisplay) ausgebildet sein und/oder es kann eine Anordnung von Positionssensoren (zum Beispiel Annäherungssensoren) um die Anzeigeeinheit herum angeordnet sein, wodurch eine berührungsfreie Steuerung des Gerätes ohne eine berührungsempfindliche Anzeigeeinheit möglich ist, beispielsweise mit einer Arbeitsentfernung von etwa 5 cm vom Gerät.

Ausführungsbeispiele der Erfindung werden im Folgenden anhand von Zeichnungen näher erläutert.

Darin zeigen:
- Figuren 1A bis 1D: schematische Abbildungen unterschiedlicher Ausführungsformen eines Gerätes zur biometrischen Verifizierung und/oder Identifizierung,
- Figur 2: eine schematische Ansicht des Gerätes zur biometrischen Verifizierung und/oder Identifizierung ohne einen Spiegel,
- Figur 3: eine schematische Ansicht des Gerätes zur biometrischen Verifizierung und/oder Identifizierung mit einem Spiegel, und
- Figur 4: eine schematische Ansicht eines beispielhaften Designs des Gerätes zur biometrischen Verifizierung und/oder Identifizierung.

Einander entsprechende Teile sind in allen Figuren mit den gleichen Bezugszeichen versehen.

Die Figuren 1A bis 1D zeigen schematische Abbildungen unterschiedlicher Ausführungsformen eines Gerätes 1 zur biometrischen Verifizierung und/oder Identifizierung, insbesondere jeweilige Ansichten einer Vorderseite.

Eine in Figur 1A gezeigte Variante des Gerätes 1 unterstützt die Aufnahme von Fingerabdrücken, Gesichtern und von Identitätsdokumenten unter Verwendung einer an der Vorderseite angeordneten Kamera.

Eine in Figur 1B gezeigte Variante stimmt im Wesentlichen mit der in Figur 1A gezeigten Variante überein, weist jedoch eine zusätzliche Kamera an der Vorderseite für die Erfassung von Gesichtern und Identitätsdokumenten auf.

Eine in Figur 1C gezeigte Variante stimmt im Wesentlichen mit der in Figur 1B gezeigten Variante überein, wobei die Kamera und die Beleuchtungseinheiten 9 für die Aufnahme der Fingerabdrücke (gegebenenfalls auch die Kameraeinheit 3 und der Annäherungssensor 10) auf einer rechten Seite in einer angeschrägten Kante des Gerätes 1 angeordnet sind. In einer alternativen Ausführungsform können die Kamera und die Beleuchtungseinheiten 9 für die Aufnahme der Fingerabdrücke (gegebenenfalls auch die Kameraeinheit 3 und der Annäherungssensor 10) auch auf einer linken Seite in einer angeschrägten Kante des Gerätes 1 angeordnet sein.

Eine in Figur 1D gezeigte Variante ähnelt der in Figur 1C gezeigten Variante, wobei jedoch die Kamera und die Beleuchtungseinheiten 9 für die Aufnahme der Fingerabdrücke (gegebenenfalls auch die Kameraeinheit 3 und der Annäherungssensor 10) an einer Unterseite des Gerätes 1 angeordnet und nach unten, beispielsweise in Richtung eines Bodens oder Untergrunds, gerichtet sind.

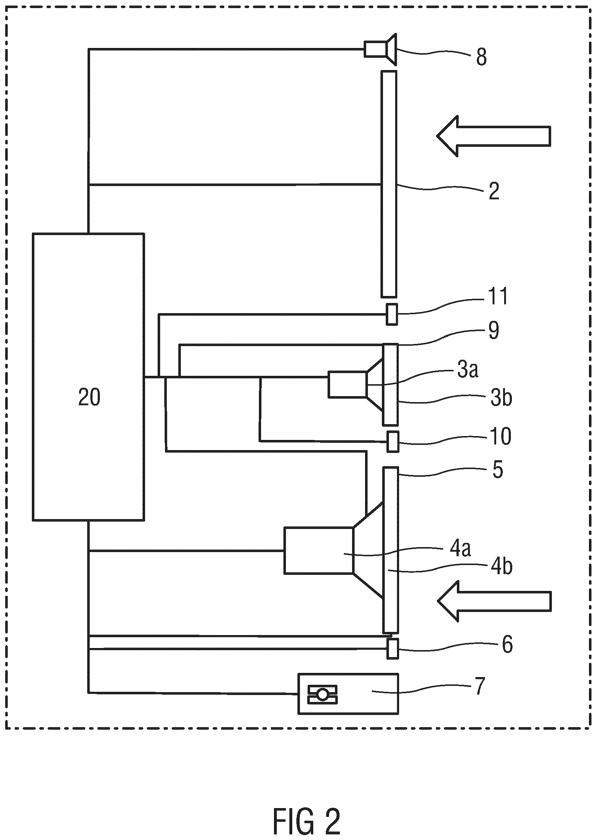

Figur 2 ist eine schematische Ansicht des Gerätes 1 zur biometrischen Verifizierung und/oder Identifizierung ohne einen Spiegel 12 mit einer Vielzahl möglicher Komponenten oder mit allen möglichen Komponenten, von denen einige optional sein können.

Die Erfindung wird im Folgenden anhand von Ausführungsbeispielen eines Gerätes 1 zur biometrischen Verifizierung und/oder Identifizierung anhand von Fingerabdrücken und oder eines Gesichts und anhand eines Verfahrens zum Betrieb des Gerätes 1 beschrieben.

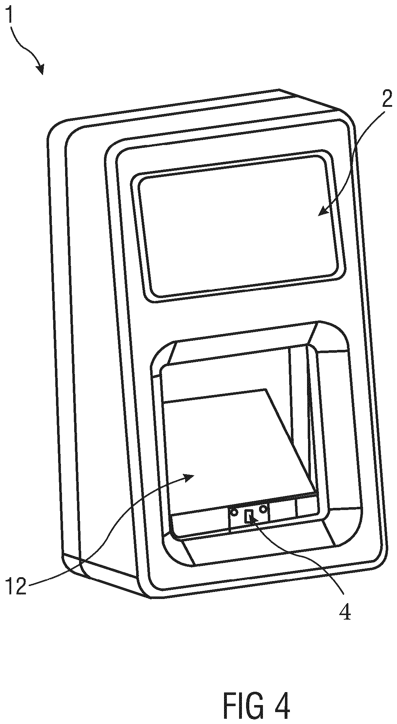

Figur 4 ist eine schematische Ansicht eines beispielhaften Designs des Gerätes 1 zur biometrischen Verifizierung und/oder Identifizierung.

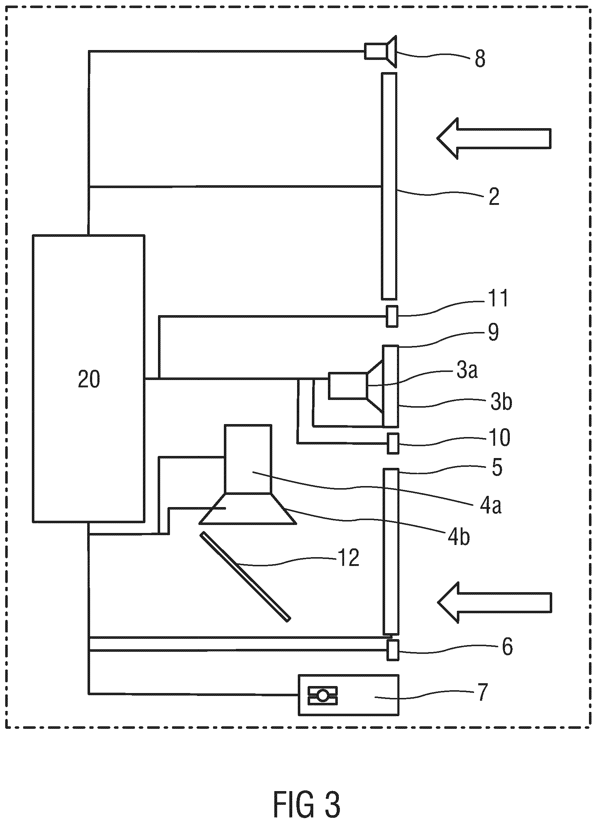

Das Beispiel 1 basiert auf der in Figur 1A gezeigten Variante. Das Gerät 1 weist eine Anzeigeeinheit 2, eine Kameraeinheit 4 (beispielsweise eine Kamera 4a mit Objektiv 4b), eine Beleuchtungseinheit 5 und einen Annäherungssensor 6 auf. Diese Konfiguration eignet sich zur Aufnahme von Fingerabdrücken und anschließender Identifizierung. Dabei nähert eine Hand eines Nutzers sich dem Gerät 1, der Annäherungssensor 6 detektiert die Hand und übermittelt einen Abstand von der Hand zum Annäherungssensor 6 an eine in den Figuren 2 und 3 gezeigte Verarbeitungseinheit 20.

Die Kameraeinheit 4 weist eine Kamera 4a und ein Objektiv 4b oder eine Linse 4b, beispielsweise eine Flüssiglinse oder eine motorisierte Linse, auf (siehe Figuren 2 und 3). Die Linse 4b wird auf die Entfernung eingestellt, die vom Annäherungssensor 6 geliefert wurde und die Linse 4b der Kameraeinheit 4 wird automatisch auf die Hand fokussiert und die Finger werden von der Kamera 4a (siehe Figuren 2 und 3) aufgenommen. Dieses aufgenommene Bild wird an die Verarbeitungseinheit 20 übermittelt, wo interessierende Fingerbereiche (finger regions of interest) extrahiert und Fingerabdrücke mit allen gespeicherten Mustern in einer Datenbank registrierter Nutzer oder mit einem bereitgestellten biometrischen Muster aus einem biometrischen Dokument verglichen werden. Das Resultat des Abgleichs wird auf der Anzeigeeinheit 2 angezeigt. Beispielsweise wird die Identität angezeigt, wenn der Abgleich positiv war, anderenfalls wird eine Information über eine erfolglose Identifizierung angezeigt.

Das Gerät 1 kann dieses Ergebnis auch an eine API (Application Programming Interface) senden, beispielsweise, um ein Tor zu öffnen.

Das Beispiel 2 basiert auf dem Beispiel 1, wobei zusätzlich Gesichtserkennung verwendet wird. Das Gesicht mit einer geöffneten Hand auf der rechten oder linken Seite des Kopfes mit der Handfläche in Richtung des Gerätes 1 weisend nähern sich dem Annäherungssensor 6 im Gerät 1, welches die Aufnahme ähnlich der Beschreibung im Beispiel 1 startet. Es werden lediglich anstelle nur der Hand zwei biometrische Aufnahmen gemacht - zum einen Fingerabdrücke (von den Fingerspitzen der geöffneten Hand) und zum anderen eine Aufnahme des Gesichts. Die Erkennung dieser zwei biometrischen Aufnahmen erfolgt in der Verarbeitungseinheit 20 (siehe Figuren 2 und 3), wo auch eine Fusion der Entscheidung (decision fusion) durchgeführt wird. Bei der Fusion der Entscheidung werden beide Ergebnisse aus den Vergleichen (Gesicht und Fingerabdruck) kombiniert. In der Realität hat der Fingerabdruck eine höhere Zuverlässigkeit, ist also oft für die Entscheidung wichtiger. Der Rest des Prozesses (Anzeige des Resultats und/oder Komunikation mit einer API) ist ähnlich wie im Beispiel 1.

Das Beispiel 3 basiert auf dem Beispiel 1, jedoch ist zusätzlich ein Lesegerät 7 für Personen-Identitätskarten vorgesehen. Die Bedienung entspricht der Beschreibung zum Beispiel 1, wobei jedoch eine weitere Option besteht - der Nutzer kann sein BID (biometrisches Identitätsdokument) verwenden und der Kameraeinheit 4 präsentieren, wobei der Annäherungssensor 6 das sich dem Gerät 1 nähernde Objekt detektiert und die Entfernungsinformation an die Verarbeitungseinheit 20 sendet, welches die Linse 4b (insbesondere Flüssiglinse) steuert. Die Kamera 4a nimmt die Vorderseite eines biometrischen Identitätsdokuments auf. Anschließend erkennt die Verarbeitungseinheit 20 die Zeichen in einer maschinenlesbaren Zone (MRZ) des biometrischen Identitätsdokuments. Der Nutzer kann dann dazu aufgefordert werden (beispielsweise über eine Ausgabe auf der Anzeigeeinheit 2), das biometrische Identitätsdokument näher an eine Ecke des Gerätes 1 heranzuführen, hinter der das mit einem Symbol eines biometrischen Identitätsdokuments gekennzeichnete Lesegerät 7 angeordnet ist, sodass das funkbasierte Lesegerät 7 eine Information aus einem Chip des biometrischen Identitätsdokument unter Verwendung eines aus den Zeichen der maschinenlesbaren Zone ermittelten Schlüssels empfangen und anschließend an die Verarbeitungseinheit 20 übermitteln kann. Anschließend kann der Nutzer aufgefordert werden, seine Hand zur Erfassung von Fingerabdrücken zu präsentieren (ähnlich wie in der Beschreibung zum Beispiel 1). Hierbei erfolgt ein Vergleich der erfassten biometrischen Daten und der aus dem Chip des biometrischen Identitätsdokuments ausgelesenen Musterdaten biometrischer Merkmale. Wenn eine Übereinstimmung gefunden wird, dann wird die Identität des Inhabers des biometrischen Identitätsdokuments bestätigt. Der Rest des Verfahrens (Anzeige des Resultats und/oder Komunikation mit einer API) ist ähnlich wie im Beispiel 1.

Beispiel 4 ist eine Kombination der Beispiele 2 und 3.

Beispiel 5 basiert auf dem Beispiel 2. Der einzige Unterschied zum Beispiel 2 ist, dass eine zusätzliche Kameraeinheit 3 vorgesehen ist, die separat für die Gesichtserfassung verwendet wird, wobei die Kameraeinheit 4 für die Erfassung der Fingerabdrücke verwendet wird. Dabei können zwei unterschiedlich ausgebildete Linsen 4b, 3b und/oder zwei unterschiedlich ausgebildete Kameras 4a, 3a (zum Beipiel hinsichtlich Auflösung und/oder Bildwiederholrate) verwendet werden, beispielsweise auch mit unterschiedlich ausgebildeten Beleuchtungseinheiten 5, 9. Fingerabdrücke werden beispielsweise näher am Gerät 1 erfasst, das Gesicht hingegen eher aus größerer Entfernung.

Beispiel 6 basiert auf Beispiel 4. Der einzige Unterschied zum Beispiel 4 ist, dass eine zusätzliche Kameraeinheit 4 vorgesehen ist, die separat für die Gesichtserfassung verwendet wird, wobei die Kameraeinheit 3 für die Erfassung der Fingerabdrücke und die Aufnahme des biometrischen Identitätsdokuments verwendet wird. Dabei können zwei unterschiedlich ausgebildete Linsen 4b, 3b und/oder zwei unterschiedlich ausgebildete Kameras 4a, 3a (zum Beipiel hinsichtlich Auflösung und/oder Bildwiederholrate) verwendet werden, beispielsweise auch mit unterschiedlich ausgebildeten Beleuchtungseinheiten 5, 9. Fingerabdrücke und das biometrische Identitätsdokument werden beispielsweise näher am Gerät 1 erfasst, das Gesicht hingegen eher aus größerer Entfernung.

Beispiel 7 basiert auf Beispiel 5. Der einzige Unterschied zum Beispiel 5 ist, dass die Kameraeinheit 3 mit der Beleuchtungseinheit 9 und einem Annäherungssensor 10 seitlich (links oder rechts) ausgerichtet ist, insbesondere im Verhältnis zur Ausrichtung der Kameraeinheit 4. Der Grund für diese Konfiguration kann eine mögliche Verwendung sichtbaren Lichtes (für die Beleuchtung und /oder für PAD - Presentation Attack Detection) sein, welches den Nutzer bei frontaler Anwendung blenden könnte. Unsichtbares Licht könnte hier ebenfalls verwendet werden. Die seitliche Ausrichtung der Kameraeinheit 3 mit der Beleuchtungseinheit 9 und dem Annäherungssensor 10 unter einem Winkel stellt dabei sicher, dass das Licht nicht direkt auf die Augen des Nutzers fällt. Die seitliche Kameraeinheit 3 mit der Beleuchtungseinheit 9 und dem Annäherungssensor 10 kann beispielsweise nur für die Erfassung der Fingerabdrücke und/oder des biometrischen Identitätsdokuments verwendet werden. Die nach vorn ausgerichtete Kameraeinheit 4 mit der Beleuchtungseinheit 5 und dem Annäherungssensor 6 kann beispielsweise nur für die Erfassung des Gesichts und/oder des biometrischen Identitätsdokuments verwendet werden.

Beispiel 8 basiert auf Beispiel 6. Der einzige Unterschied zum Beispiel 6 ist, dass die Kameraeinheit 3 mit der Beleuchtungseinheit 9 und dem Annäherungssensor 10 seitlich (links oder rechts) ausgerichtet ist, insbesondere im Verhältnis zur Ausrichtung der Kameraeinheit 4. Der Grund für diese Konfiguration kann eine mögliche Verwendung sichtbaren Lichtes (für die Beleuchtung und /oder für PAD - Presentation Attack Detection) sein, welches den Nutzer bei frontaler Anwendung blenden könnte. Die seitliche Ausrichtung der Kameraeinheit 3 mit der Beleuchtungseinheit 9 und dem Annäherungssensor 10 unter einem Winkel stellt dabei sicher, dass das Licht nicht direkt auf die Augen des Nutzers fällt. Die seitliche Kameraeinheit 3 mit der Beleuchtungseinheit 9 und dem Annäherungssensor 10 kann beispielsweise nur für die Erfassung der Fingerabdrücke und/oder des biometrischen Identitätsdokuments verwendet werden. Die nach vorn ausgerichtete Kameraeinheit 4 mit der Beleuchtungseinheit 5 und dem Annäherungssensor 6 kann beispielsweise nur für die Erfassung des Gesichts und/oder des biometrischen Identitätsdokuments verwendet werden.

Beispiel 9 basiert auf Beispiel 5. Der einzige Unterschied zum Beispiel 5 ist, dass die Kameraeinheit 3 mit der Beleuchtungseinheit 9 und dem Annäherungssensor 10 nach unten ausgerichtet ist, insbesondere im Verhältnis zur Ausrichtung der Kameraeinheit 4. Der Grund für diese Konfiguration kann eine mögliche Verwendung sichtbaren Lichtes (für die Beleuchtung und /oder für PAD - Presentation Attack Detection) sein, welches den Nutzer bei frontaler Anwendung blenden könnte. Die Ausrichtung der Kameraeinheit 3 mit der Beleuchtungseinheit 9 und dem Annäherungssensor 10 unter einem Winkel nach unten stellt dabei sicher, dass das Licht nicht direkt auf die Augen des Nutzers fällt. Die nach unten gerichtete Kameraeinheit 3 mit der Beleuchtungseinheit 9 und dem Annäherungssensor 10 kann beispielsweise nur für die Erfassung der Fingerabdrücke und/oder des biometrischen Identitätsdokuments verwendet werden. Die nach vorn ausgerichtete Kameraeinheit 4 mit der Beleuchtungseinheit 5 und dem Annäherungssensor 6 kann beispielsweise nur für die Erfassung des Gesichts und/oder des biometrischen Identitätsdokuments verwendet werden.

Beispiel 10 basiert auf Beispiel 6. Der einzige Unterschied zum Beispiel 6 ist, dass die Kameraeinheit 3 mit der Beleuchtungseinheit 9 und dem Annäherungssensor 10 nach unten ausgerichtet ist, insbesondere im Verhältnis zur Ausrichtung der Kameraeinheit 4. Der Grund für diese Konfiguration kann eine mögliche Verwendung sichtbaren Lichtes (für die Beleuchtung und/oder für PAD - Presentation Attack Detection) sein, welches den Nutzer bei frontaler Anwendung blenden könnte. Die Ausrichtung der Kameraeinheit 3 mit der Beleuchtungseinheit 9 und dem Annäherungssensor 10 unter einem Winkel nach unten stellt dabei sicher, dass das Licht nicht direkt auf die Augen des Nutzers fällt. Die nach unten gerichtete Kameraeinheit 3 mit der Beleuchtungseinheit 9 und dem Annäherungssensor 10 kann beispielsweise nur für die Erfassung der Fingerabdrücke und/oder des biometrischen Identitätsdokuments verwendet werden. Die nach vorn ausgerichtete Kameraeinheit 4 mit der Beleuchtungseinheit 5 und dem Annäherungssensor 6 kann beispielsweise nur für die Erfassung des Gesichts und/oder des biometrischen Identitätsdokuments verwendet werden.

Alle in den Figuren 1A bis 1D gezeigten Ausführungsbeispiele können entsprechend Figur 2 und/oder Figur 3 mit oder ohne einen Spiegel 12 ausgebildet sein und eine berührungsempfindliche Anzeigeeinheit 2 (Touchdisplay) aufweisen, insbesondere wenn es keine Notwendigkeit zur Verwendung eines Arrays von Annäherungssensoren 11 gibt, die Anzeigeeinheit 2 jedoch mit den Fingern des Nutzers berührt werden soll, insbesondere zur Bedienung des Gerätes 1. Alternativ kann eine berührungslose Anzeigeeinheit 2 verwendet werden. In diesem Fall kann ein Array von Annäherungssensoren 11 vorgesehen sein, welches zur Detektion eines Fingers in einer Entfernung von einigen Zentimetern zum Gerät 1 zur Steuerung der Anzeigeeinheit 2 dient.

Alle oben beschriebenen Beispiele können ferner mit einer 3D-Kamera 8 ausgestattet sein, die zur genauen Positionierung der Hand zur Aufnahme der Fingerabdrücke und/oder zur Gesichtserfassung, beispielsweise einschließlich der Detektion der korrekten Position und Entfernung dieser biometrischen Merkmale und des biometrischen Identitätsdokuments, verwendet werden können. Die 3D-Kamera 8 kann auch für die dreidimensionale biometrische Erkennung insbesondere des Gesichts und/oder des Kopfes und der räumlichen Geometrie der Hand verwendet werden.

Figur 2 unterscheidet sich von Figur 3 darin, dass in Figur 3 ein Spiegel 12 (beispielsweise ein Vorderflächenspiegel) vorgesehen ist. Wenn die Fokusebene der Kameraeinheit 4 (Kamera 4a mit Linse 4b) zu weit vom Gerät 1 entfernt liegt oder läge, kann ein Spiegel 12 verwendet werden, um den optischen Pfad zu erweitern.

Das Lesegerät 7 oder die Antenne 7 zum Lesen des biometrischen Identitätsdokuments kann an unterschiedlichen Positionen angeordnet sein, wie in den Figuren 1A bis 1D gezeigt ist. Eine weitere Option ist, die Antenne 7 um die Beleuchtungseinheit 5 oder 9 herum anzuordnen. Der Vorteil dabei ist, dass der Nutzer das biometrische Identitätsdokument der Kameraeinheit 4 oder 3 präsentiert und während der Annäherung des biometrischen Identitätsdokuments näher zum Gerät 1 nicht nur optische Information vom biometrischen Identitätsdokument gelesen wird, sondern die Funk-Information anschließend gleich aus dem Chip des biometrischen Identitätsdokuments gelesen werden kann.

### BEZUGSZEICHENLISTE

- 1: Gerät
- 2: Anzeigeeinheit
- 3: Kameraeinheit
- 3a: Kamera, Kamera-Chip, Kamera-Sensor
- 3b: Objektiv, Linse
- 4: Kameraeinheit
- 4a: Kamera, Kamera-Chip, Kamera-Sensor
- 4b: Objektiv, Linse
- 5: Beleuchtungseinheit
- 6: Annäherungssensor
- 7: Lesegerät, Antenne
- 8: 3D-Kamera
- 9: Beleuchtungseinheit
- 10: Annäherungssensor
- 11: Annäherungssensor
- 12: Spiegel
- 20: Verarbeitungseinheit

## Patentansprüche

1. Berührungsloses, multimodales biometrisches Gerät (1) für die biometrische Verifizierung und/oder biometrische Identifizierung einer Person,
umfassend:
- eine Verarbeitungseinheit (20),
- eine erste Kameraeinheit (4), die zur Abtastung eines Raumes außerhalb des biometrischen Gerätes (1) oder in einem offenen Hohlraum des biometrischen Gerätes (1) angeordnet ist und die eine erste Linse (4b) und einen ersten Kamera-Sensor (4a) umfasst, der mit einer Verarbeitungseinheit (20) verbunden ist, und
- einen ersten Annäherungssensor (6) zur Messung einer Entfernung eines in dem von der ersten Kameraeinheit (4) erfassten Raum angeordneten Objekts von dem ersten Annäherungssensor (6), der mit der Verarbeitungseinheit (20) zur Übertragung der gemessenen Entfernungswerte verbunden ist,
- wobei die erste Linse (4b) als eine Flüssiglinse ausgebildet und mit der Verarbeitungseinheit (20) verbunden ist, um Signale für ihre Fokussierung auf der Grundlage der vom ersten Annäherungssensor (6) gemessenen Entfernungswerte zu empfangen.

2. Berührungsloses, multimodales biometrisches Gerät (1) nach Anspruch 1, ferner umfassend eine erste Beleuchtungseinheit (5), insbesondere in Form einer Anordnung von Leuchten, die insbesondere in gleichmäßigem Winkelabstand um die erste Linse (4b) herum angeordnet sind.

3. Berührungsloses, multimodales biometrisches Gerät (1) nach Anspruch 1 oder 2, ferner umfassend eine zweite Kameraeinheit (3) mit einem zweiten Kamera-Sensor (3a) und einer zweiten Linse (3b), die mit der Verarbeitungseinheit (20) verbunden ist.

4. Berührungsloses, multimodales biometrisches Gerät (1) nach einem der vorhergehenden Ansprüche, wobei die zweite Linse (3b) eine Flüssiglinse oder eine Linse mit einem motorisierten Fokussierungsmechanismus ist.

5. Berührungsloses, multimodales biometrisches Gerät (1) nach Anspruch 3 oder 4, wobei die zweite Kameraeinheit (3) zum Erfassen eines Bereichs außerhalb des biometrischen Geräts (1) angeordnet ist,
wobei das biometrische Gerät (1) einen zweiten Annäherungssensor (10) aufweist, der so angeordnet ist, dass er einen Abstand eines in dem von der zweiten Kameraeinheit (3) erfassten Raum angeordneten Objekts von dem zweiten Annäherungssensor (10) misst, und der mit der Verarbeitungseinheit (20) zum Übertragen der gemessenen Entfernungswerte verbunden ist,
- wobei die zweite Linse (3b) mit der Verarbeitungseinheit (20) verbunden ist, um Signale für ihre Fokussierung auf der Grundlage der vom zweiten Annäherungssensor (10) gemessenen Entfernungswerte zu empfangen.

6. Berührungsloses, multimodales biometrisches Gerät (1) nach einem der Ansprüche 3 bis 5, aufweisend eine Vorderseite, an der die zweite Kameraeinheit (3) und darunter die erste Kameraeinheit (4) angeordnet ist.

7. Berührungsloses, multimodales biometrisches Gerät (1) nach einem der Ansprüche 3 bis 5, aufweisend eine Vorderseite, an der die zweite Kameraeinheit (3) und darunter an der Vorderseite ein Eingang zu dem offenen Hohlraum angeordnet ist, in dem ein Spiegel (12) angeordnet ist, um den von der ersten Kameraeinheit (4) abgetasteten Raum in dem offenen Hohlraum zu reflektieren.

8. Berührungsloses, multimodales biometrisches Gerät (1) nach einem der vorhergehenden Ansprüche, ferner aufweisend ein mit der Verarbeitungseinheit (20) verbundenes Lesegerät (7) zum Lesen biometrischer Identitätsdokumente, insbesondere darin angeordneter Chips.

9. Berührungsloses, multimodales biometrisches Gerät (1) nach einem der vorhergehenden Ansprüche, ferner aufweisend eine Anzeigeeinheit (2) zur Anzeige der Identifizierungsergebnisse und/oder Verifizierungsergebnisse, verbunden mit der Verarbeitungseinheit (20).

10. Berührungsloses, multimodales biometrisches Gerät (1) nach einem der vorhergehenden Ansprüche, ferner aufweisend eine 3D-Kamera (8), die so angeordnet ist, dass sie den Bereich außerhalb des biometrischen Geräts (1) erfasst und die mit der Verarbeitungseinheit (20) verbunden ist.

11. Verfahren zum Betrieb des multimodalen biometrischen Gerätes (1) nach einem der vorhergehenden Ansprüche, wobei mittels der ersten Kameraeinheit (4) mehrere Bilder einer Hand-Innenfläche einer Hand mit mehreren Fokusebenen, in denen die Hand-Innenfläche und/oder Fingerspitzen von Fingern der Hand liegen, aufgenommen und an die Verarbeitungseinheit (20) übermittelt werden, durch die eine biometrische Identifizierung durchgeführt wird.

12. Verfahren nach Anspruch 11, wobei drei Sätze von Bildern der Hand-Innenfläche mit mehreren Fokusebenen, in denen die Hand-Innenfläche und/oder Fingerspitzen liegen, aufgenommen werden, wobei ein erster Satz aufgenommen wird, wenn die Hand-Innenfläche in einer ersten Position im rechten Winkel zu einer optischen Achse der ersten Kameraeinheit (4) präsentiert wird, wobei ein zweiter Satz aufgenommen wird, wenn die Hand aus dieser Position um eine proximal-distale Achse nach links gedreht wurde, wobei ein dritter Satz aufgenommen wird, wenn die Hand aus der ersten Position um die proximal-distale Achse nach rechts gedreht wurde.

13. Verfahren nach Anspruch 11 oder 12, wobei mittels der ersten oder zweiten Kameraeinheit (4, 3) ein maschinenlesbarer Bereich einer Seite eines biometrischen Identitätsdokuments erfasst wird, wobei im maschinenlesbaren Bereich vorhandene Zeichen durch die Verarbeitungseinheit (20) erkannt und ein darin enthaltener Schlüssel extrahiert wird, wobei mittels des Lesegerätes (7) unter Verwendung des Schlüssels Daten aus einem im biometrischen Identitätsdokument vorhandenen Chip ausgelesen werden.

14. Verfahren nach einem der Ansprüche 11 bis 13, wobei mittels der zweiten Kameraeinheit (3), ausgelöst vom Annäherungssensor (10), unter Verwendung der Beleuchtungseinheit (9) mindestens ein Bild des Gesichts eines Nutzers aufgenommen und an die Verarbeitungseinheit (20) übermittelt wird, durch die die biometrische Identifizierung durchgeführt wird.

15. Verfahren nach einem der Ansprüche 11 bis 14, wobei mittels der zweiten Kameraeinheit (3), ausgelöst vom Annäherungssensor (10), unter Verwendung der Beleuchtungseinheit (9) mindestens ein Bild einer rechten Iris und/oder einer linken Iris eines Nutzers aufgenommen und an die Verarbeitungseinheit (20) übermittelt wird, durch die die biometrische Identifizierung durchgeführt wird.

16. Verfahren nach einem der Ansprüche 13 bis 15, wobei aus den aufgenommenen Bildern der Hand-Innenfläche Fingerabdrücke und/oder ein Handflächenabdruck ermittelt werden/wird, wobei die ermittelten Fingerabdrücke und/oder der ermittelte Handflächenabdruck mit einem biometrischen Muster aus den vom Chip ausgelesenen Daten verglichen werden/wird.

17. Verfahren nach einem der Ansprüche 14 bis 16, wobei das aufgenommene Bild des Gesichts und/oder das Bild der rechten Iris und/oder der linken Iris mit einem biometrischen Muster aus den vom Chip ausgelesenen Daten verglichen wird.

18. Verfahren nach einem der Ansprüche 11 bis 17, wobei mittels der 3D-Kamera (8) eine Position und eine Ausrichtung der Hand und/oder des Kopfes des Nutzers geprüft und eine Rückmeldung an den Nutzer mit der Aufforderung gegeben wird, die Position und/oder Ausrichtung zu korrigieren.
